(19) Europäisches Patentamt
European Patent Office
Office européen des brevets

(11) EP 2 851 579 A1

(12) EUROPÄISCHE PATENTANMELDUNG

(43) Veröffentlichungstag:
25.03.2015 Patentblatt 2015/13

(51) Int Cl.:
F16F 15/123 (2006.01)     F16F 15/129 (2006.01)

(21) Anmeldenummer: 14181714.8

(22) Anmeldetag: 21.08.2014

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 24.09.2013 DE 102013219162

(71) Anmelder: ZF Friedrichshafen AG
88038 Friedrichshafen (DE)

(72) Erfinder:
• Handrik, Philipp
02633 Göda (DE)
• Kopp, Mathias
96050 Bamberg (DE)

(54) Kupplungsanordnung mit Schwingungstilger

(57) Offenbart wird eine Kupplungsanordnung (6) zur Übertragung eines Drehmoments von einer Antriebseinheit (2), insbesondere einem Verbrennungsmotor eines Kraftfahrzeugs, auf eine Abtriebseinheit (16), insbesondere ein Getriebe, mit mindestens einer Kupplungsvorrichtung (10), die eingangsseitig mit einer Abtriebswelle (4) der Antriebseinheit (2) und ausgangsseitig mit einem Eingang eines Torsionsschwingungsdämpfers (12) verbunden ist, wobei der Torsionsschwingungsdämpfer (12) ausgangsseitig über eine Reibeinrichtung (42) mit einem Schwingungstilger (40) verbunden ist, dadurch gekennzeichnet, dass bei kleinen Verdrehwinkeln (α), insbesondere um den Nullpunkt des Torsionsschwingungsdämpfers (12), der Torsionsschwingungsdämpfer (12) eine im Wesentlichen flache Federkennlinie (44) und/oder die Reibeinrichtung (42) eine geringe Reibung (72) aufweist, sowie eine Antriebsstranganordnung (1) mit einer derartigen Kupplungsanordnung (6).

Fig. 2

EP 2 851 579 A1

**Beschreibung**

Vorliegende Erfindung betrifft eine Kupplungsanordnung zur Übertragung eines Drehmoments von einer Antriebseinheit, insbesondere einem Verbrennungsmotor eines Kraftfahrzeugs, auf eine Abtriebseinheit, insbesondere ein Getriebe mit mindestens einer Kupplungsvorrichtung, einem Torsionsschwingungsdämpfer und einem Schwingungstilger, sowie eine Antriebsstranganordnung mit einer derartigen Kupplungsanordnung.

Aus dem Stand der Technik sind Kupplungsanordnungen bekannt, die in Kombination mit einem Schwingungstilger eingesetzt werden können. Dabei können die Kupplungsscheiben direkt mit dem Schwingungstilger fest verbunden sein, wobei der Schwingungstilger in Wirkrichtung vor oder nach dem Torsionsschwingungsdämpfer angeordnet sein kann. Dabei ist im Stand der Technik die Anordnung des Schwingungstilgers vor dem Torsionsschwingungsdämpfer deutlich bevorzugt, da es sich herausgestellt hat, dass es wirktechnisch ungünstig ist, die Tilgermassen auf der Sekundärseite des Torsionsschwingungsdämpfers anzuordnen.

Grund dafür ist, dass bei einer Anordnung der Tilgermassen nach dem Torsionsschwingungsdämpfer, wie beispielsweise in der Druckschrift DE 196 54 894 dargestellt, eine Synchroneinrichtung eines nachfolgend angeordneten Getriebes sehr aufwändig ausgestaltet werden muss.

Der Vorteil der Anordnung der Tilgermassen auf der Sekundärseite hat jedoch den großen Vorteil, dass auch Schwingungen im Antriebsstrang bei vollständig geschlossener Kupplung reduziert werden können.

Aufgabe vorliegender Erfindung ist es deshalb, eine Kupplungsanordnung mit sekundärseitig angeordnetem Schwingungstilger bereitzustellen, die eine normale Ausgestaltung des Getriebes ermöglicht.

Diese Aufgabe wird durch eine Kupplungsanordnung gemäß Patentanspruch 1 sowie eine Antriebsstranganordnung gemäß Patentanspruch 7 gelöst.

Erfindungsgemäß wird eine Kupplungsanordnung zur Übertragung eines Drehmoments von einer Antriebseinheit, insbesondere einem Verbrennungsmotor eines Kraftfahrzeugs, auf eine Abtriebseinheit, insbesondere ein Getriebe, mit mindestens einer Kupplungsvorrichtung, die eingangsseitig mit einer Abtriebswelle der Antriebseinheit und ausgangsseitig mit einem Eingang eines Torsionsschwingungsdämpfer verbunden ist, bereitgestellt. Der Torsionsschwingungsdämpfer selbst ist ausgangsseitig über eine Reibeinrichtung mit einem Schwingungstilger verbunden. Dabei basiert vorliegende Erfindung auf der Idee, die Kupplungsanordnung derart auszulegen, dass bei kleinen Verdrehwinkeln, insbesondere um den Nullpunkt des Torsionsschwingungsdämpfers, der Torsionsschwingungsdämpfer eine im Wesentlichen flache Federkennlinie und/oder die Reibeinrichtung eine geringe Reibung aufweist. Durch die flache Federkennlinie bzw. die geringe Reibung rund um den Nullpunkt, des Torsionsschwingungsdämpfers kann erreicht werden, dass der Torsionsschwingungsdämpfer in diesem Bereich im Wesentlichen keinen Einfluss ausübt, so dass Kupplungsscheibe und Schwingungstilger optimal zusammenarbeiten. Dadurch werden unerwünschte Schwingungen auch bei geschlossener Kupplung direkt vom Schwingungstilger aufgenommen und reduziert.

Gemäß einem weiteren vorteilhaften Ausführungsbeispiel kann die flache Federkennlinie dadurch erreicht werden, dass mindestens ein Federelement des Torsionsschwingungsdämpfers im Wesentlichen vorspannungslos oder nur mit geringer Vorspannung gegenüber einem ausgangsseitigen Bauteil der Kupplungsvorrichtung angeordnet ist. Dabei ist vorzugsweise ein Torsionsmoment von ungefähr 0 Nm bei einem Verdrehwinkel von ungefähr 0° vorgesehen. Aufgrund der flachen Kennlinie kann der Schwingungstilger optimal mit der Kupplungsvorrichtung zusammenarbeiten. Die flache Kennlinie entspricht dabei einer geringen Steifigkeit des Torsionsschwingungsdämpfers um den Nullpunkt. Dabei kann die Kennlinie ab einem gewissen Verdrehwinkel eine Stufe und/oder mindestens einen weiteren Bereich mit stark steigender Kennlinie aufweisen. Ein mit Vorspannung eingelegtes Federelement würde dagegen dazu führen, dass das Moment im Nullpunkt einen Sprung macht, während bei einer zu lose eingelegte Feder erst ein gewisser Verdrehwinkel benötigt wird, bis das Moment ansteigt.

Um die erfindungsgemäß flache Kennlinie bereitzustellen, kann das ausgangsseitige Bauteil, wie ein weiteres vorteilhaftes Ausführungsbeispiel zeigt, mindestens ein Federfenster aufweisen, das eine erste und eine zweite Kante hat, die das Federelement zumindest teilweise kontaktiert. Dabei ist insbesondere vorgesehen, dass die erste und/oder die zweite Kante bei kleinen Verdrehwinkeln das Federelement nur an seinem radial inneren Rand kontaktiert. Dadurch ist die von dem Federelement bereitgestellte Kraft rund um den Nullpunkt relativ gering, da das Federelement zunächst nur einseitig belastet wird. Bei zunehmender Verdrehung kontaktiert die Kante auch die radial äußeren Bereiche des Federelements, wodurch eine größere Kraft für eine weitere Verdrehung benötigt wird. Dadurch kann insbesondere eine gestufte Torsionsschwingungsdämpferkennlinie bereitgestellt werden.

Um eine sich mit dem Verdrehwinkel ändernde Reibung bereitzustellen, kann, wie ein weiteres vorteilhaftes Ausführungsbeispiel zeigt, die Reibeinrichtung als Steuerblechreibung oder als Rampenreibeinrichtung ausgebildet sein. Dabei ist insbesondere vorteilhaft, wenn sich die Reibwirkung mit steigendem Verdrehwinkel kontinuierlich vergrößert.

Gemäß einem weiteren vorteilhaften Ausführungsbeispiel weist der Schwingungstilger mindestens eine mittels eines Befestigungselements an einem Tilgerträger angeordnete Tilgermasse auf. Dabei ist es insbesondere vorteilhaft, wen der Tilger derart ausgelegt ist, dass seine Tilgerordnung unterhalb der Motorordnung liegt, wobei vorzugsweise die Tilgerordnung ab einer Tilgermassenauslenkung im Bereich von 25°-50°, vorzugsweise bei ca. 30° verringert wird.

Gemäß einem weiteren vorteilhaften Ausführungsbeispiel ist der Schwingungstilger als drehzahladaptiver Schwingungstilger ausgebildet. Dabei ist insbesondere bevorzugt, wenn der Tilgerträger und/oder die Tilgermasse eine Öffnung zeigen, deren Form eine Schwingungsbahn der Tilgermasse definiert.

Dadurch können die Tilgermassen gegen die Wirkung der Fliehkraft auf einer gekrümmten Bahn schwingen, wobei die Anpassung der Tilgerordnung über eine Veränderung der Laufbahn gegenüber dem für die Ordnung erforderlichen Optimum realisierbar ist. Dazu verläuft die Bahn vorzugsweise von ihrem Scheitelpunkt aus gesehen flacher als eine Bahn die auf eine optimale Wirkung ausgelegt ist.

Ein weiterer Aspekt vorliegender Erfindung betrifft eine Antriebsstranganordnung mit einer Antriebseinheit, insbesondere einem Verbrennungsmotor eines Kraftfahrzeugs, und einer Abtriebseinheit, insbesondere einem Getriebe, wobei zur Übertragung eines Drehmoments von der Antriebseinheit auf die Abtriebseinheit eine Kupplungsanordnung, wie oben beschrieben, vorgesehen ist. Dabei weist die Kupplungsanordnung insbesondere dann ihre optimale Wirkung auf, wenn eine wesentlich auf die Steifigkeit des Antriebsstrangs einwirkende Steifigkeit einer Fahrzeugseitenwelle, wie beispielsweise einer Radantriebswelle, im Vergleich zur Steifigkeit der Kupplungsscheibe möglichst hoch ist. Dabei ist insbesondere bevorzugt, wenn eine Seitenwelle vorgesehen ist, die ein Drehmoment von der Antriebseinheit auf ein Rad überträgt, wobei eine effektive Steifigkeit der Seitenwelle mindestens 2-fach, besonders bevorzugt ungefähr 4-fach oder 5-fach so groß wie eine Steifigkeit des Torsionsschwingungsdämpfers ist. Dabei ist nicht die tatsächliche Steifigkeit, sondern eine effektive Steifigkeit der Seitenwelle relevant. Die effektive Steifigkeit $C_{eff}$ ergibt sich dabei aus der realen Steifigkeit der Seitenwelle $C_{SW}$ und der Übersetzung eines Getriebes inklusive Differenzials $i_{ges}$. Dabei ist $C_{eff}=C_{SW}/i_{ges}^2$ definiert. Dabei ist besonders bevorzugt, wenn die effektive Steifigkeit der Seitenwellen im höchsten Gang des Getriebes mindestens 4 mal, vorzugsweise sogar 5 mal größer als die reale Steifigkeit des Torsionsschwingungsdämpfers der Kupplungsanordnung ist.

Zudem ist bevorzugt, wenn eine wesentlich auf die Massenträgheit des Antriebsstrangs einwirkende Massenträgheit der geschlossenen Kupplungsvorrichtung in einem bestimmten eingelegten Gang drehenden Bauteile höchstens um einen Faktor 10 mal größer ist als die Massenträgheit der Tilgermassen. Dabei ist das Massenträgheitsmoment des Antriebsstrangs $J_{ges}$ als die Summe der effektiven Einzelträgheiten $J_{eff}$ definiert, die sich aus der realen Trägheit J jedes Teils und der Übersetzung i zwischen dem Bauteil und der Getriebeeingangswelle ergibt, d.h. $J_{eff} = J/i^2$ und $J_{ges} = \sum_{i=1}^{n} J_{eff,n}$. Dabei ist insbesondere bevorzugt, wenn der Antriebsstrang derart ausgelegt ist, dass das gesamte Trägheitsmoment $J_{ges}$ des Antriebsstrangs maximal ungefähr 15 mal, vorzugsweise 10 mal größer ist als das Massenträgheitsmoment $J_T$ der Tilgermassen des Schwingungstilgers.

Weitere Vorteile und vorteilhafte Ausführungsformen sind in den Ansprüchen, der Beschreibung und den Zeichnungen definiert.

Im Folgenden soll die Erfindung anhand von in den Figuren dargestellten Ausführungsbeispielen näher beschrieben werden. Dabei sind die Figuren rein exemplarischer Natur und sollen nicht den Schutzbereich der Anmeldung festlegen. Dieser wird allein durch die anhängigen Ansprüche definiert.

Es zeigen:

Fig. 1:    eine schematische Prinzipdarstellung eines Antriebsstrangs;

Fig. 2:    eine schematische Schnittansicht durch ein erstes Ausführungsbeispiel vorliegender Kupplungsanordnung;

Fig. 3:    eine schematische Darstellung einer Kennlinie des in Fig. 1 und 2 dargestellten Torsionsschwingungsdämpfers;

Fig. 4:    eine schematische Detaildarstellung der in Fig. 1 dargestellten Kupplungsanordnung;

Fig. 5:    eine weitere schematische Detaildarstellung der in Fig. 1 dargestellten Kupplungsanordnung; und

Fig. 6:    eine schematische Darstellung einer Kennlinie der erfindungsgemäßen Schwingungstilgervorrichtung.

Im Folgenden werden gleiche oder funktionell gleichwirkende Elemente mit denselben Bezugszeichen gekennzeichnet.

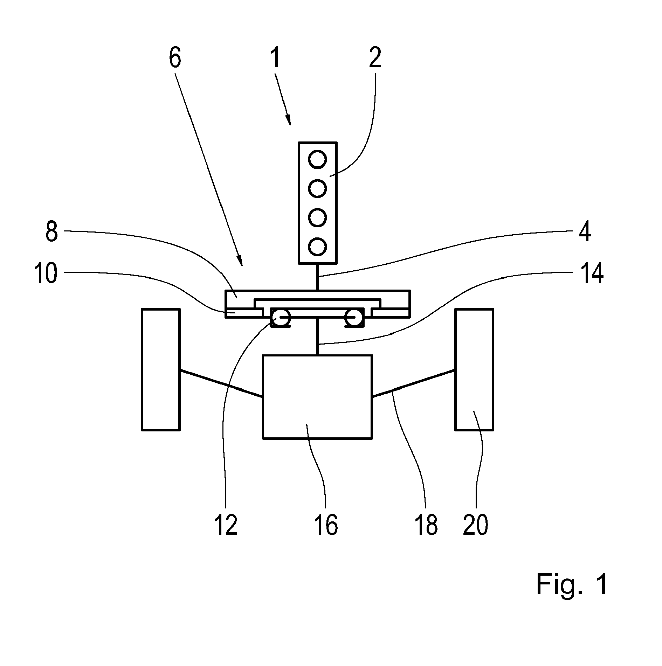

Fig. 1 zeigt schematisch einen Antriebsstrang 1 mit einem Verbrennungsmotor 2, dessen Drehmoment über eine Abtriebswelle 4, insbesondere eine Kurbelwelle, an eine Kupplungsanordnung 6 übergeben wird. Die Kupplungsanordnung 6 weist weiterhin ein mit der Kurbelwelle 4 drehfest verbundenes Schwungrad 8 auf, das wiederum mit einer Kupplungsscheibe 10 mit Torsionsschwingungsdämpfer 12 verbunden ist. Dabei ist der Torsionsschwingungsdämpfer 12 wirkungstechnisch nach der Kupplungsscheibe 10 angeordnet. Vom Torsionsschwingungsdämpfer 12 aus wird das Drehmoment weiterhin auf eine Getriebeeingangswelle 14 eingeleitet, von wo es an ein Getriebe 16 übergeben wird. Das Getriebe 16 selbst übersetzt die Drehbewegung mithilfe der verschiedenen Gänge und gibt sie an Seitenwellen 18 ab, die wiederum mit Rädern 20 verbunden sind.

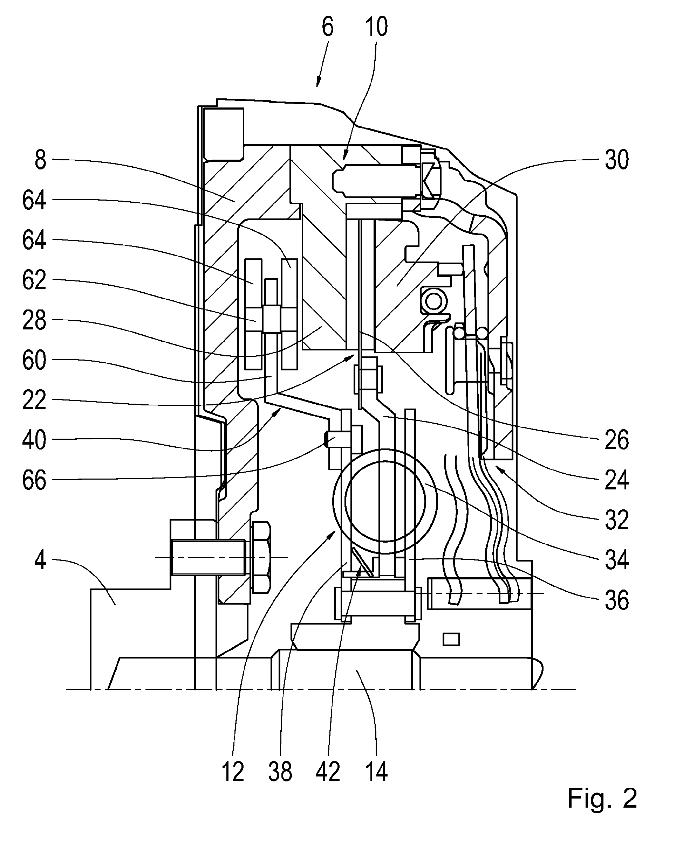

Als Kupplungsanordnung 6 kommt eine erfindungsgemäße Kupplungsanordnung 6 zum Einsatz, die schematisch in Fig. 2 dargestellt ist. Dabei zeigt auch Fig. 2 schematisch das Schwungrad 8, das drehfest mit der Kurbelwelle 4 verbunden ist und das Drehmoment an eine Eingangsseite der Kupplungsvorrichtung 10 übergibt. Die Kupplungsvorrichtung 10 ist als Reibungskupplung ausgebildet mit einer Kupplungsscheibe 22, die in bekannter Weise eine Nabenscheibe 24 mit daran drehfest befestigten Reibbelägen 26 aufweist. Die Reibbeläge 26 werden zwischen einer Anpressplatte 28 und der Druckplatte 30 mithilfe des Kupplungsbetätigungsmechanismus 32 festgelegt, um ein Drehmoment von dem Schwungrad 8 auf die Getriebeeingangswelle 14 zu übertragen.

Des Weiteren zeigt Fig. 2, dass zwischen der Nabenscheibe 24 und der Getriebeeingangswelle 14 weiterhin ein Torsionsschwingungsdämpfer 12 angeordnet ist, dessen Eingangsseite über die Nabenscheibe 24 gebildet ist. Der Torsionsschwingungsdämpfer 12 weist weiterhin Federelemente 34 auf, die eine Verdrehung zwischen Nabenscheibe 24 und Deckblechen 36; 38 des Torsionsschwingungsdämpfers 12 dämpfen. Weiterhin zeigt Fig. 2, dass an der Ausgangsseite des Torsionsschwingungsdämpfers, die über die Deckbleche 36, 38 dargestellt ist, am Deckblech 38 weiterhin ein Schwingungstilger 40 vorgesehen ist, der in bekannter Weise Schwingungen im Antriebsstrang tilgt. Dabei ist der Schwingungstilger 40 erfindungsgemäß wirktechnisch nach dem Torsionsschwingungsdämpfer 12 angeordnet. Weiterhin zeigt Fig. 2, dass zwischen Nabenscheibe 24 und Deckblech 38 eine Reibeinrichtung 42 vorgesehen ist, die einer Verdrehung zwischen Nabenscheibe 24 und Deckblechen 36, 38 zusätzlich entgegenwirkt.

Da der Schwingungstilger 40 wirktechnisch nach dem Torsionsschwingungsdämpfer 12 angeordnet ist, musste im Stand der Technik das Getriebe 16 auf die zusätzliche Masse ausgelegt werden. Da jedoch erfindungsgemäß der Torsionsschwingungsdämpfer 12 und/oder die Reibeinrichtung 42 derart ausgebildet sind, dass um einen geringen Verdrehwinkelbereich hauptsächlich Kupplungsvorrichtung 10 und Schwingungstilger 40 zusammenwirken, kann auf eine derartige Auslegung des Getriebes 16 verzichtet werden.

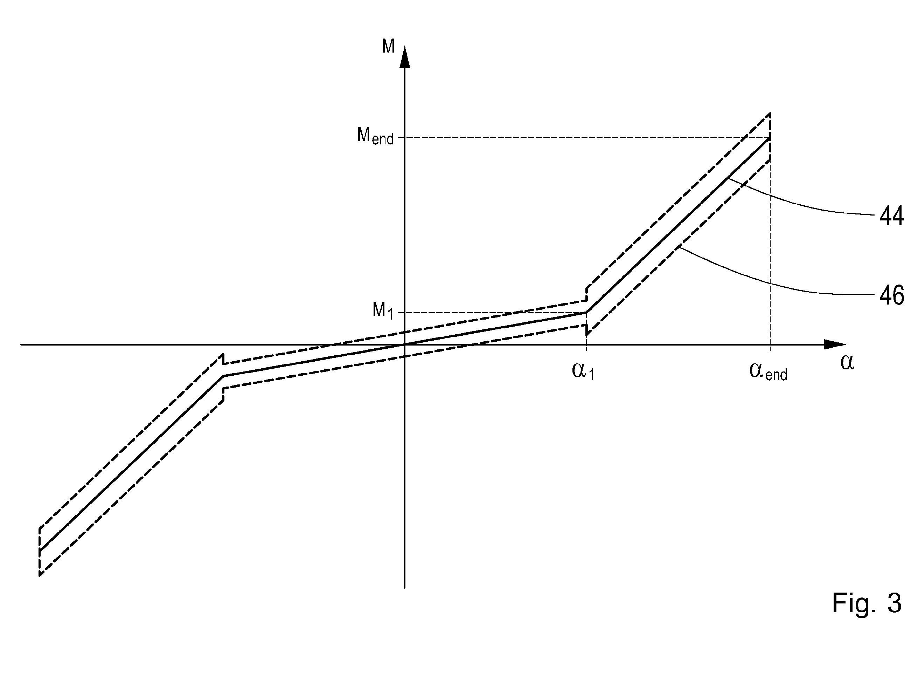

Dazu weist der erfindungsgemäße Torsionsschwingungsdämpfer 12, wie Fig. 3 zeigt, eine in einem Bereich um die Nulllinie flache Kennlinie auf. Fig. 3 zeigt schematisch das Torsionsmoment M auf der y-Achse, das für jeden Verdrehwinkel $\alpha$ der x-Achse aufgetragen ist. Dabei zeigt Fig. 3, dass in einem Bereich von 0 bis zu einem Verdrehwinkel $\alpha_1$ die Kennlinie 44 nur eine geringe Steigung hat und auch das Torsionsmoment M nur bis zu einem ersten Wert $M_1$ steigt. Dieser Wert $M_1$ ist vergleichsweise gering gegenüber einem maximalen Torsionsmoment $M_{END}$, was bei einem maximalen Verdrehwinkel von $\alpha_{END}$ erreicht wird. Da die Kennlinie 44 um die Nulllage herum flach ist, ist auch die Steifigkeit des Torsionsschwingungsdämpfers 12 in diesem Bereich niedrig. Zudem ist vorteilhaft, wenn in dem Bereich von 0 bis zu einem Verdrehwinkel von $\alpha_1$ auch eine Reibung der Reibeinrichtung 42 niedrig ist. In dem in Fig. 3 dargestellten Ausführungsbeispiel ist die Reibung als gestrichelte Linie 46 dargestellt, die, wie üblich, zudem die Form einer Hysterese aufweist. Die Steigung oder Ausgestaltung der sich an den flachen Bereich zwischen 0 und $\alpha_1$ anschließende Kennlinienbereich zwischen $\alpha_1$ und $\alpha_{END}$ kann frei gewählt werden und kann, statt wie in Fig. 3 dargestellt linear zu steigen, auch weitere Stufen enthalten.

Weiterhin erkennt man in Fig. 3, dass die Kennlinie im Bereich von 0 tatsächlich mit einem Torsionsmoment von 0 Nm beginnt. Das bedeutet gleichzeitig, dass das Federelement 34 möglichst ohne Vorspannung oder nur mit geringer Vorspannung eingelegt ist. Ein mit Vorspannung angeordnetes Federelement 34 würde zu einer Kennlinie führen, bei der das Moment M im Nullpunkt einen Sprung, beispielsweise auf M1 machen würde, was zu vermeiden ist. Im Gegensatz dazu würde ein zu lose eingelegtes Federelement dazu führen, dass die Kennlinie, wenn auch flach, so doch nicht kontinuierlich ansteigt, sondern, im Nullpunkt einen Sprung zeigt, da ein gewisser Verdrehwinkel benötigt werden würde, bis ein Momentanstieg zu beobachten wäre.

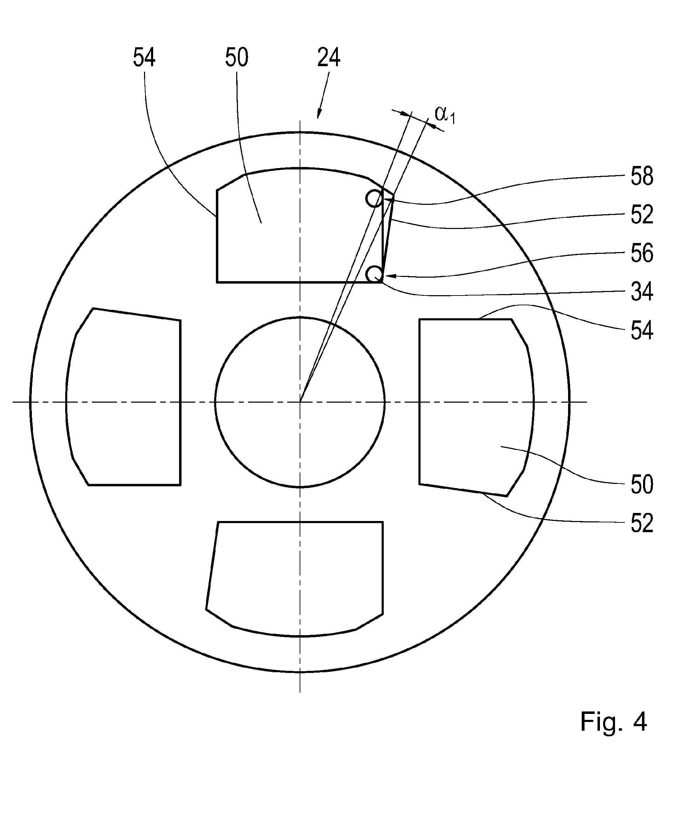

Um die erfindungsgemäße Kennlinie 44 zu erreichen, kann beispielsweise, wie Fig. 4 zeigt, die Nabenscheibe 24 Fenster 50 aufweisen, die eine erste Kante 52 und eine zweite Kante 54 aufweisen, die das Federelement 34 kontaktieren. Dabei zeigt Fig. 4, dass das Federelement 34 in Ruhelage nur an seinem radial inneren Bereich 56 mit der Kante 52 in Kontakt kommt. Erst ab einem Verdrehwinkel von $\alpha 1$ kontaktiert die Kante 52 auch den radial äußeren Bereich 58 des Federelements 52, so dass für eine weitere Verdrehung das gesamte Federelement 32 belastet ist. In einem Verdrehwinkel von 0 bis $\alpha 1$ dagegen wird nur der radial innere Bereich 56 des Federelements 34 belastet, so dass sich im Endeffekt die Kennlinie 44 ergibt, die zunächst, also bis zu einem Winkel von $\alpha 1$, flach und ab dem Winkel $\alpha 1$ steiler verläuft.

Die in Fig. 3 gezeigte winkelabhängige Reibungssteigerung kann beispielsweise in bekannter Weise über eine Rampenreibeinrichtung oder eine Steuerblechreibung erreicht werden.

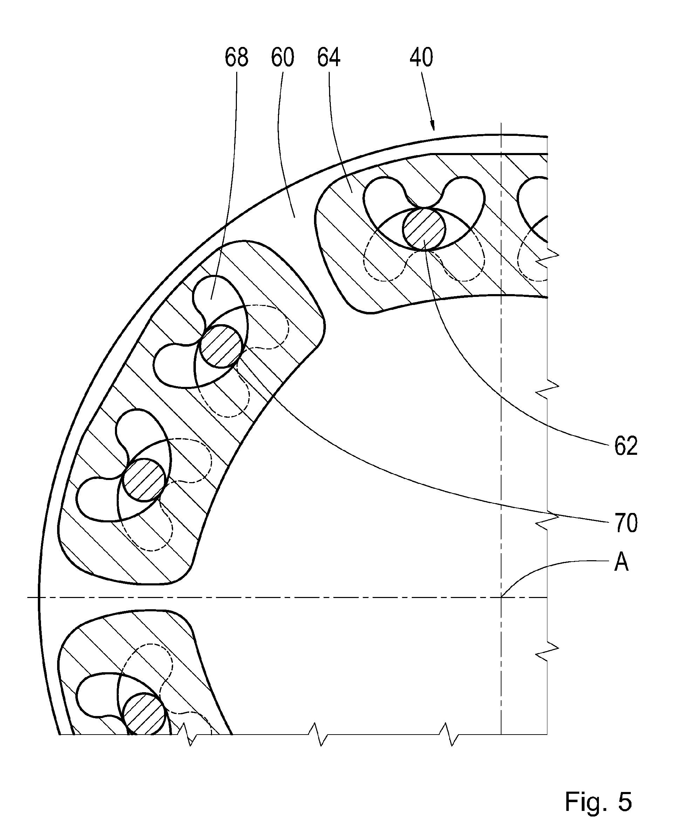

Fig. 5 zeigt schematisch eine Aufsicht auf den erfindungsgemäßen, in Fig. 2 dargestellten Schwingungstilger 40, wobei der Schwingungstilger 40, wie den Figuren 2 und 5 zu entnehmen ist, einen Tilgerträger 60 aufweist, an dem über Koppelbolzen 62 Tilgermassen 64 befestigt sind. Der Tilgerträger 60 ist wiederum, wie Fig. 2 zeigt, drehfest über eine Befestigung 66 mit dem Torsionsdeckblech 38 verbunden.

Die Aufsicht aus Fig. 5 auf den Schwingungstilger 40 zeigt weiterhin, dass an den Tilgermassen 64 oder am Trägerblech 60 Öffnungen 68 ausgebildet sind, die derart ausgestaltet sind, dass die Tilgermassen 64 auf einer gekrümmten Bahn schwingen können. Dabei ist erfindungsgemäß die über die Öffnung 68 definierte Bahn derart ausgestaltet, dass die Bahn von ihrem Scheitelpunkt 70 aus gesehen flacher verläuft als es eine Auslegung auf die optimale Wirkung erfordern würde.

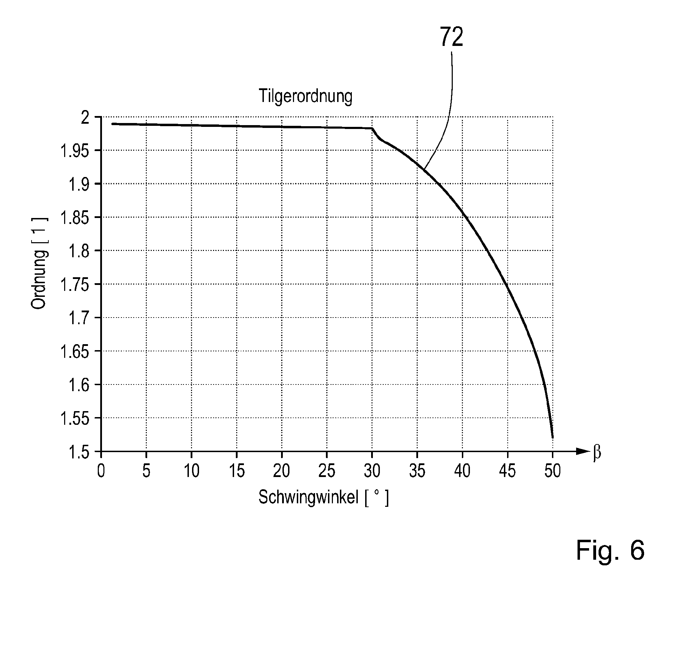

Über diese Veränderung der Laufbahn kann eine Anpassung der Ordnung realisiert werden. Dabei ist es insbesondere sinnvoll, den Schwingungstilger 40 so auszulegen, dass seine Tilgerordnung knapp unterhalb einer Motorhauptordnung liegt. Insbesondere vorteilhaft ist es dabei, die Tilgerordnung ab einer Auslenkung von 30° weiter abzusenken. Eine schematische Darstellung einer derartigen Tilgerkennlinie 72 für den Verlauf der Tilgerordnung ist in Fig. 6 dargestellt. Dabei zeigt Fig. 6 auf der x-Achse den Schwingwinkel $\beta$ der Tilgermassen, während auf der y-Achse die Tilgerordnung aufgetragen ist. In dem dargestellten Fall ist ein Verbrennungsmotor mit zweiter Ordnung als Motorhauptordnung zugrunde gelegt. Wie der Kennlinie 72 des Schwingungstilgers 40 zu entnehmen ist, ist der Verlauf der Tilgerordnung kurz unterhalb der Motorhauptordnung ausgelegt, was über eine entsprechende Anpassung der Tilgerbahnen, wie oben beschrieben, erfolgt. Weiterhin zeigt Fig. 6, dass ab einem Schwingwinkel $\beta$ von ungefähr 30° die Tilgerordnung weiter abgesenkt wird, um ein stabiles Schwingverhalten des Schwingungstilgers 40 zu erreichen. Das zusätzliche Absenken dient dabei insbesondere dem mechanischen Schutz des Schwingungstilgers 40.

Eine besonders gute Wirkung weist die erfindungsgemäße Kupplungsanordnung 6 dann auf, wenn eine wesentlich auf eine Steifigkeit des Antriebsstrangs 2 einwirkende Steifigkeit der Fahrzeugseitenwelle 18 im Vergleich zur Steifigkeit der Kupplungsvorrichtung 6 möglichst hoch ist. Dabei sollte jedoch nicht die tatsächliche Steifigkeit, sondern eine effektive Steifigkeit der Seitenwellen 18 berücksichtigt werden. Diese ergibt sich aus der realen Steifigkeit der Seitenwellen 18 und der Übersetzung des Getriebes inklusive Differenzials. Die effektive Steifigkeit $C_{eff}$ wird dabei als $C_{eff} = C_{SW}/i_{ges}^2$ definiert.

Weiterhin sollte die effektive Steifigkeit der Seitenwellen 18 im höchsten Gang des Getriebes 16 mindestens 4 mal, vorzugsweise 5 mal größer sein als eine reale Steifigkeit des Torsionsschwingungsdämpfers 12. Zudem weist die Konstruktion eine besonders gute Wirkung auf, wenn die wesentlich auf die Massenträgheit des Antriebsstrangs einwirkende Massenträgheit $J_{ges}$ bei geschlossener Kupplungsvorrichtung 6 in einem bestimmen Gang höchstens einen Faktor 10 mal größer ist als die Massenträgheit der Tilgermassen $J_T$. Dabei ist das Massenträgheitsmoment des Antriebsstrangs $J_{ges}$ als die Summe der effektiven Einzelträgheiten $J_{eff}$ definiert, die sich aus der realen Trägheit J jedes Teils und der Übersetzung i zwischen dem Bauteil und der Getriebeeingangswelle ergibt. Dabei ist vorzugsweise das gesamte Trägheitsmoment des Antriebsstrangs $J_{ges}$ maximal 15 mal, vorzugsweise 10 mal größer als das Massenträgheitsmoment der Tilgermassen $J_T$.

Insgesamt ermöglicht die erfindungsgemäße Ausgestaltung der Kupplungsanordnung 6 und des Antriebsstrangs 1, dass auch der Schwingungstilger 40 auf der Sekundärseite der Kupplungsanordnung 6 angeordnet werden kann, ohne dass das nachfolgende Getriebe aufwändig angepasst werden muss.

Bezugszeichen

| 1 | Antriebssstranganordnung |
|---|---|
| 2 | Verbrennungsmotor |
| 4 | Kurbelwelle |
| 6 | Kupplungsanordnung |
| 8 | Schwungrad |
| 10 | Kupplungsvorrichtung |
| 12 | Torsionsschwingungsdämpfer |
| 14 | Getriebeeingangswelle |
| 16 | Getriebe |
| 18 | Seitenwelle |
| 20 | Rad |
| 22 | Kupplungsscheibe |
| 24 | Nabenscheibe |
| 26 | Reibbeläge |
| 28 | Anpressplatte |
| 30 | Druckplatte |
| 32 | Kupplungsbetätigungsmechanismus |
| 34 | Federelement |
| 36, 38 | Deckbleche des Torsionsschwingungsdämpfers |
| 40 | Schwingungstilger |
| 42 | Reibeinrichtung |
| 44 | Torsionsschwingungsdämpferfederkennlinie |
| 46 | Reibung |
| 50 | Federfenster |
| 52 | erste Kante |
| 54 | zweite Kante |
| 56 | radial innerer Bereich des Federelements |
| 58 | radial äußerer Bereich des Federelements |
| 60 | Tilgerträger |
| 62 | Koppelbolzen |
| 64 | Tilgermasse |
| 66 | Befestigungselement |
| 68 | Öffnung |
| 70 | Scheitelpunkt |
| 72 | Kennlinie des Tilgerordnungsverlaufs |

Patentansprüche

1. Kupplungsanordnung (6) zur Übertragung eines Drehmoments von einer Antriebseinheit (2), insbesondere einem Verbrennungsmotor eines Kraftfahrzeugs, auf eine Abtriebseinheit (16), insbesondere ein Getriebe, mit mindestens einer Kupplungsvorrichtung (10), die eingangsseitig mit einer Abtriebswelle (4) der Antriebseinheit (2) und ausgangsseitig mit einem Eingang eines Torsionsschwingungsdämpfers (12) verbunden ist, wobei der Torsionsschwingungsdämpfer (12) ausgangsseitig über eine Reibeinrichtung (42) mit einem Schwingungstilger (40) verbunden ist, **dadurch gekennzeichnet, dass** bei kleinen Verdrehwinkeln ($\alpha$), insbesondere um einen Nullpunkt des Torsionsschwingungsdämpfers (12), der Torsionsschwingungsdämpfer (12) eine im Wesentlichen flache Federkennlinie (44) und/oder die Reibeinrichtung (42) eine geringe Reibung (72) aufweist.

2. Kupplungsanordnung (6) nach Anspruch 1, wobei der Torsionsschwingungsdämpfer (12) mindestens ein Federelement (34) aufweist, das im Wesentlichen vorspannungslos oder mit geringer Vorspannung gegenüber einem ausgangsseitigen Bauteil der Kupplungsvorrichtung (10) angeordnet ist, wobei vorzugsweise bei einem Verdrehwinkel ($\alpha$) von ungefähr 0° ein Torsionsmoment (M) von ungefähr 0Nm vorliegt.

3. Kupplungsanordnung (6) nach Anspruch 2, wobei das ausgangsseitige Bauteil der Kupplungsvorrichtung (10) mindestens ein Federfenster (50) aufweist, das eine erste und eine zweite Kante (52, 54) aufweist, die das Federelement (34) zumindest teilweise kontaktieren, wobei die erste und/oder die zweite Kante (52, 54) bei kleinen Verdrehwinkeln ($\alpha$) das Federelement (34) nur an seinem radial inneren Rand (56) kontaktieren.

4. Kupplungsanordnung (6) nach einem der vorhergehenden Ansprüche, wobei die Reibeinrichtung (42) als Steuerblechreibung oder als Rampenreibeinrichtung ausgebildet ist, wobei sich vorzugsweise die Reibwirkung der Reibeinrichtung (42) mit steigendem Verdrehwinkel ($\alpha$) vergrößert.

5. Kupplungsanordnung (6) nach einem der vorhergehenden Ansprüche, wobei der Schwingungstilger (40) ein drehzahladaptiver Schwingungstilger (40) ist, wobei vorzugsweise der Schwingungstilger (40) mindestens eine mittels eines Befestigungselements (62) an einem Tilgerträger (60) angeordnete Tilgermasse (64) aufweist, wobei der Tilgerträger (60) und/oder die Tilgermasse (64) eine Öffnung (68) aufweisen, deren Form eine Schwingungsbahn der Tilgermassen (64) definiert.

6. Kupplungsanordnung (6) nach Anspruch 5, wobei die Öffnung (68) derart ausgebildet ist, dass die Tilgermasse (64) gegen die Wirkung der Fliehkraft auf einer gekrümmten Bahn schwingt, wobei vorzugsweise die Bahn von ihrem Scheitelpunkt (70) aus gesehen flacher verläuft als eine Bahn die auf eine optimale Wirkung ausgelegt ist.

7. Antriebsstranganordnung (1) mit einer Antriebseinheit (2), insbesondere einem Verbrennungsmotor eines Kraftfahrzeugs, und einer Abtriebseinheit (16), insbesondere einem Getriebe, wobei zur Übertragung eines Drehmoments von der Antriebseinheit (2) auf die Abtriebseinheit (16) eine Kupplungsanordnung (6) nach einem der vorhergehenden Ansprüche vorgesehen ist.

8. Antriebsstranganordnung (1) nach Anspruch 7, wobei weiterhin mindestens eine Seitenwelle (18) vorgesehen ist, die insbesondere ein Drehmoment von der Abtriebseinheit (16) auf mindestens ein Rad (20) überträgt, wobei eine effektive Steifigkeit der Seitenwelle (18) mindestens 2-fach, vorzugsweise mehr als 3-fach, so groß wie eine Steifigkeit des Torsionsschwingungsdämpfers (12) ist.

9. Antriebsstranganordnung (1) nach Anspruch 7 oder 8, wobei ein Gesamtträgheitsmoment ($J_{ges}$) des Antriebsstrangs nicht mehr als 20 mal, vorzugsweise nicht mehr als 15 mal größer ist als ein Massenträgheitsmoment der Tilgermassen ($J_T$) des Schwingungstilgers (40).

Fig. 1

6    10

8

64

64

62

28

60

22

40

66

4

12   38   42   14

30

26

24

32

34

36

Fig. 2

Fig. 3

EP 2 851 579 A1

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 14 18 1714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 10 671 A1 (ZF SACHS AG [DE]) 12. September 2002 (2002-09-12) | 1,2,4,7,8 | INV.<br>F16F15/123<br>F16F15/129 |
| Y | * das ganze Dokument * ----- | 3 | |
| X | DE 10 2011 006533 A1 (ZAHNRADFABRIK FRIEDRICHSHAFEN [DE]) 10. November 2011 (2011-11-10) * Absatz [0001] - Absatz [0054]; Abbildung 1 * ----- | 1,4-9 | |
| Y | US 2005/023103 A1 (MIZUKAMI HIROSHI [JP]) 3. Februar 2005 (2005-02-03) | 3 | |
| A | * das ganze Dokument * ----- | 1 | |

RECHERCHIERTE
SACHGEBIETE (IPC)

F16F

Der vorliegende Recherchenbericht wurde für alle Patentansprüche erstellt

| Recherchenort | Abschlußdatum der Recherche | Prüfer |
|---|---|---|
| Den Haag | 9. Januar 2015 | Werth, Jochen |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 1714

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2015

| Im Recherchenbericht angeführtes Patentdokument | Datum der Veröffentlichung | Mitglied(er) der Patentfamilie | Datum der Veröffentlichung |
|---|---|---|---|
| DE 10110671 A1 | 12-09-2002 | KEINE | |
| DE 102011006533 A1 | 10-11-2011 | CN 102893055 A | 23-01-2013 |
| | | DE 102011006533 A1 | 10-11-2011 |
| | | DE 102011017659 A1 | 10-11-2011 |
| | | DE 102011017661 A1 | 10-11-2011 |
| | | EP 2567120 A1 | 13-03-2013 |
| | | EP 2567121 A1 | 13-03-2013 |
| | | US 2013205944 A1 | 15-08-2013 |
| | | WO 2011138095 A1 | 10-11-2011 |
| | | WO 2011138216 A1 | 10-11-2011 |
| | | WO 2011138217 A1 | 10-11-2011 |
| US 2005023103 A1 | 03-02-2005 | JP 4395343 B2 | 06-01-2010 |
| | | JP 2005054845 A | 03-03-2005 |
| | | US 2005023103 A1 | 03-02-2005 |
| | | WO 2005012767 A1 | 10-02-2005 |

EPO FORM P0461

Für nähere Einzelheiten zu diesem Anhang : siehe Amtsblatt des Europäischen Patentamts, Nr.12/82

EP 2 851 579 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19654894